# EUROPÄISCHE PATENTSCHRIFT

(11) **EP 1 636 469 B1**
(45) Veröffentlichungstag und Bekanntmachung des Hinweises auf die Patenterteilung: **02.08.2006**
(21) Anmeldenummer: 04736639.8
(22) Anmeldetag: 11.06.2004
(51) Int. Cl.: F01N 3/28, B01D 45/08

(54) **AUFFANGEINHEIT FÜR EINE ABGASREINIGUNGSVORRICHTUNG**
COLLECTION UNIT FOR AN EXHAUST GAS PURIFICATION DEVICE
COLLECTEUR DESTINE A UN DISPOSITIF D'EPURATION DE GAZ D'ECHAPPEMENT

(30) Priorität: 16.06.2003 DE 10327030
(43) Veröffentlichungstag der Anmeldung: 22.03.2006
(73) Patentinhaber: Oberland Mangold GmbH, 82438 Eschenlohe (DE)
(72) Erfinder: MANGOLD, Matthias, 82438 Eschenlohe (DE); MANGOLD, Christian, 82407 Garmisch-Partenkirchen (DE)
(74) Vertreter: Tomerius, Isabel
(86) Internationale Anmeldenummer: PCT/EP2004/006310
(87) Internationale Veröffentlichungsnummer: WO 2004/113695

(56) Entgegenhaltungen:
- WO-A-02/083274

## Beschreibung

Die Erfindung betrifft ein Auffangelement für eine Abgasreinigungsvorrichtung zum Beseitigen von Rußpartikeln aus dem Abgas einer Brennkraftmaschine zum Einbringen in eine Abgasströmung. Insbesondere betrifft die Erfindung eine filterlose Auffangeinheit mit frei durchströmbaren Kanälen, die regenerierbar ist.

Um das Abgas einer Brennkraftmaschine, insbesondere eines Dieselmotors von Rußpartikeln zu reinigen, werden üblicherweise Rußfilter vorgesehen, mit denen Rußpartikel aufgefangen werden können. Um die Rußpartikel aus dem Rußfilter wieder zu entfernen, können die aufgefangenen Rußpartikel z.B. durch NO₂, oxidiert werden, so dass die Rußpartikel, deren Hauptbestandteil Kohlenstoff ist, in unschädliches CO₂ umgesetzt werden.

Bei üblicherweise verwendeten Filtersystemen wird der Abgasstrom durch eine poröse Wandung geleitet, auf deren Oberfläche sich die Rußpartikel abscheiden. Sie haben jedoch den Nachteil, dass die Porenöffnungen verstopfen können und einen unerwünschten Druckabfall hervorrufen, der eine unerwünschte Druckerhöhung am Abgasausgang der Brennkraftmaschine hervorruft. Dies hat zur Folge, dass der Kraftstoffverbrauch der Brennkraftmaschine erhöht wird.

Aus der Druckschrift DE 100 20 170 C1 ist eine Abgasreinigungsvorrichtung bekannt, die ein Auffangelement mit einer Strukturierung aufweist, um Verwirbelungs- und Beruhigungszonen zu schaffen, in denen zumindest ein Teil der Partikel solange festgehalten bzw. herumgewirbelt wird, dass eine genügende Wahrscheinlichkeit zur Reaktion mit dem im Abgas vorhandenen Stickstoffdioxid besteht. Es wird weiterhin vorgeschlagen, dass die Wände des Auffangelementes mit katalytisch-aktivem Material beschichtet sind, um Stickstoffdioxid NO₂ zu bilden.

Auch aus der Druckschrift EP 107 27 65 A2 ist bekannt, das Auffangelement mit dem Oxidationskatalysator zu einer funktionellen Einheit so zusammenzufassen, dass das Auffangelement katalytisch beschichtete Oberflächen aufweist, auf denen die Rußpartikel abgeschieden werden.

Bei den bekannten filterlosen Abgasreinigungsvorrichtungen besteht jedoch der Nachteil, dass die abgeschiedene Menge an Rußpartikel entlang des Auffangelementes in Strömungsrichtung abnimmt. Dies liegt daran, dass die Rußpartikelkonzentration des Abgases, d.h. die Menge der im Abgas vorhandenen Rußpartikel, in Strömungsrichtung abnimmt. Gleichzeitig nimmt die NO₂-Konzentration über der Länge der Auffangeinheit in Strömungsrichtung aufgrund des zunehmenden Katalysationsgrades stetig zu. Dadurch ergibt sich sowohl am stromzugewandten Endes des Auffangelement wie auch am stromabgewandten Ende des Auffangelementes ein stöchiometrisches Ungleichgewicht zwischen abgeschiedenen Rußpartikeln und bereitgestelltem NO₂.

Am stromzugewandten Ende des Auffangelementes werden somit überschüssige Rußpartikel, die nicht durch NO₂ umgesetzt werden konnten, abgelagert. Dies kann den Strömungswiderstand für das Abgas erhöhen und führt somit zu einem Druckanstieg auf der Abgasseite der Brennkraftmaschine.

Am stromabgewandten Ende des Auffangelementes ist aufgrund der katalytischen Umsetzung mehr NO₂ im Abgasstrom vorhanden als für die Oxidation der dort abgeschiedenen Rußpartikel notwendig ist. Durch das in die Umwelt abgegebene NO₂ kann ein unangenehmer Geruch entstehen.

Es ist Aufgabe der vorliegenden Erfindung eine Auffangeinheit für eine Abgasreinigungsvorrichtung bereitzustellen, bei der ein dauerhaftes Ablagern von Rußpartikeln verhindert werden kann. Es ist weiterhin Aufgabe der vorliegenden Erfindung, das katalytische Material der Beschichtung optimal einzusetzen, so dass möglichst wenig Stickstoffdioxid NO₂ an die Umwelt abgegeben wird und katalytische Materialien, wie Edelmetalle, eingespart werden.

Diese Aufgabe wird durch die Auffangeinheit nach Anspruch 1 gelöst.

Weitere vorteilhafte Ausgestaltungen der Erfindung sind in den abhängigen Ansprüchen angegeben.

Erfindungsgemäß ist eine Auffangeinheit für eine Abgasreinigungsvorrichtung zum Beseitigen von Rußpartikeln aus dem Abgasstrom einer Brennkraftmaschine vorgesehen. Die Auffangeinheit weist ein Auffangelement auf, wobei der Abgasstrom an einer Oberfläche des Auffangelementes vorbeiströmt. Das Auffangelement umfasst eine Strukturierung, zum Beispiel mit bezüglich der Strömungsrichtung des Abgases und der Oberfläche vertikalen Strukturen, insbesondere mit freien Kanälen und in die Strömungsrichtung des Abgases eingreifenden Umlenkungs-, Verwirbelungs-, (Schaufel-) und Speicherzonen, um Abscheidezonen bzw. Verweilzonen für die Rußpartikel im Abgas zu schaffen. An den stromab- und -zugewandten Seiten der Strukturen können sich Rußpartikel in den Abscheidezonen absetzen. Die Art und/oder Beschaffenheit der Strukturierung des Auffangelementes bestimmt den Verlauf einer Abscheiderate für Rußpartikel über die Länge des Auffangelementes. Das Auffangelement ist mit einer Beschichtung mit einem katalytischem Material versehen, um einen NO-Anteil des Abgases entsprechend eines Katalysationsgrades so zu oxidieren, dass ein von dem Katalysationsgrad abhängiger Anteil NO₂ gebildet wird. Die Auffangeinheit ist so gestaltet, dass die Strukturierungen und/oder die Beschichtungen an einem stromzugewandten Abschnitt der Auffangeinheit zu einem stromabgewandten Abschnitt der Auffangeinheit verschieden ist.

Auf diese Weise ist es möglich, die Art und Beschaffenheit von Strukturierungen und Beschichtungen so zueinander anzupassen, dass im Wesentlichen keine Rußpartikel dauerhaft auf dem Auffangelement abgelagert werden und zum anderen kein erheblicher NO₂-Überschuss entsteht, der nicht für die Oxidation der Rußpartikel verwendet wird.

Insbesondere sind die Strukturierung und die Art der Beschichtung an dem stromzugewandten Abschnitt der Auffangeinheit und die Strukturierung und die Beschichtung an dem stromabgewandten Abschnitt der Auffangeinheit jeweils so aufeinander abgestimmt, dass die durchschnittliche Abscheiderate von Rußpartikeln jeweils nicht größer ist als die durchschnittliche Oxidationsrate der Rußpartikel durch den Anteil von katalysiertem Stickstoffdioxid NO₂ im Abgas. Dies hat den Vorteil, dass keine Rußpartikel dauerhaft abgelagert werden, so dass kein zusätzlicher Strömungswiderstand für den Abgasstrom durch abgelagerte Rußpartikel entsteht. Dies hätte zur Folge, dass der Druck auf der Abgasseite der Brennkraftmaschine sich vergrößert und dadurch der Kraftstoffverbrauch erhöht wird.

Vorzugsweise sind der Verlauf der Strukturierung des Auffangelementes und/oder der Verlauf der Beschichtung des Auffangelementes so aufeinander abgestimmt, dass entlang einer Länge der Auffangeinheit in Strömungsrichtung die Abscheiderate von Rußpartikeln im Wesentlichen der Oxidationsrate der Rußpartikel durch bereitgestelltes Stickstoffdioxid entspricht, so dass sich während des Betriebs der Brennkraftmaschine keine Rußpartikeln auf dem Auffangelement dauerhaft absetzen können.

Durch Vorsehen von Verläufen von Strukturierungen und Beschichtungen können an jedem Punkt des Auffangelementes die Art der Strukturierung und die Art der Beschichtung aufeinander abgestimmt werden, so dass sich Abscheiderate und Oxidationsrate an jeder Position aufeinander abstimmen lassen.

Vorzugsweise weist die Auffangeinheit entlang der Strömungsrichtung verschiedene nacheinander angeordnete Zonen mit jeweils verschiedener Strukturierung des Auffangelementes und/oder mit verschiedenen Beschichtungen mit jeweiligen Katalysationsgraden auf. Die Art der Strukturierung und der Beschichtung jeder der Zonen in der Auffangeinheit bestimmt die Abscheiderate, so dass durch Wahl der Strukturierung und Wahl der Beschichtung auf einfache Weise die Abscheiderate an die Oxidationsrate bzw. die Oxidationsrate an die Abscheiderate angepasst werden kann.

Die Strukturierung des Auffangelementes kann durch die Größe, die Form, die Anordnung und/oder die Dichte der Strukturen auf dem Auffangelement bestimmt sein. Insbesondere kann die Auffangeinheit so gestaltet sein, dass die Dichte der Strukturen pro Längeneinheit variiert.

Vorzugsweise weist das Material der Beschichtung Platin und/oder Paladium als katalytisches Material auf.

Weiterhin ist es möglich, die Beschichtungen mit verschiedenen Rauhigkeiten an dem stromzugewandten Abschnitt der Auffangeinheit und an dem stromabgewandten Abschnitt der Auffangeinheit vorzusehen, um die Abscheiderate jeweils anzupassen, wobei die Rauhigkeiten so gewählt sind, um die gewünschte Abscheiderate zu erhalten. Über die Rauhigkeit der Beschichtung lässt sich somit die Abscheiderate des Auffangelementes beeinflussen. Außerdem kann auf diese Weise ein zusätzlicher Rußspeicher geschaffen werden.

Das Auffangelement der Auffangeinheit kann eine Lochung und/oder eine Perforation aufweisen, um die Abscheiderate und den Katalysationsgrad einzustellen. Auf diese Weise können die Abscheiderate und der Katalysationsgrad durch eine geeignete Wahl von z.B. Größe und Anordnung der Lochung bzw. der Perforation gleichzeitig eingestellt werden.

In einer weiteren Ausführungsform kann vorgesehen sein, dass die Auffangeinheit mehrere Auffangelemente aufweist, die hintereinander im Abgasstrom angeordnet sind. Die Auffangeinheiten weisen jeweils Beschichtungen mit unterschiedlichen Katalysationsgraden und/oder unterschiedliche Strukturierungen auf. Auf diese Weise lässt sich die Herstellung der Auffangeinheit vereinfachen, da keine Verläufe der Beschichtung mit katalytischem Material hergestellt werden müssen.

Bevorzugte Ausführungsformen der Erfindung werden im Folgenden anhand der beigefügten Zeichnungen näher erläutert. Es zeigen schematisch:
- Figur 1 eine Auffangeinheit gemäß dem Stand der Technik;
- Figur 2 die Verläufe der Abscheiderate und der NO₂-Bildung bei einer Auffangeinheit gemäß dem Stand der Technik;
- Figur 3 eine Auffangeinheit gemäß einer bevorzugten Ausführungsform der Erfindung;
- Figur 4 die Verläufe der Abscheiderate und der Katalysationsrate nach der Ausführungsform der Figur 3;
- Figur 5 eine Auffangeinheit gemäß einer weiteren Ausführungsform der Erfindung;
- Figur 6 ein Diagramm zu Veranschaulichung der Abscheiderate und der Katalysationsrate der Auffangeinheit nach der Ausführungsform der Figur 5.

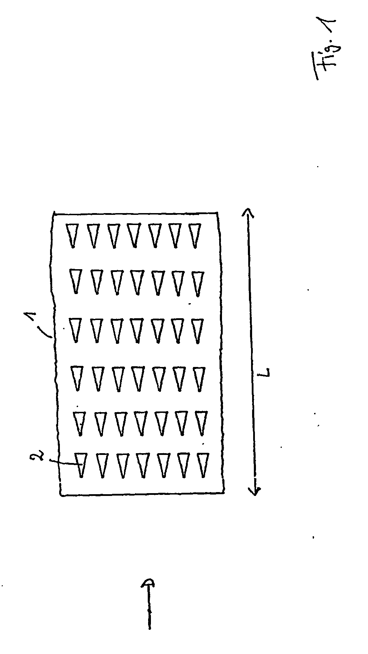

In Figur 1 ist ein Ausschnitt eines Auffangelementes 1 einer Auffangeinheit für eine (nicht gezeigte) Abgasreinigungsvorrichtung dargestellt. Es zeigt die gesamte Länge des Auffangelementes 1, über die eine Abgasströmung (durch einen Pfeil dargestellt) geleitet wird. Das Auffangelement 1 weist regelmäßig angeordnete Strukturen 2 auf, die sich bezüglich der Strömungsrichtung des Abgasstromes vertikal von der Oberfläche des Auffangelementes 1 abheben bzw. in die Oberfläche hinein erstrecken. Durch die Strukturen 2 werden freie Kanäle sowie in die Strömungsrichtung des Abgasstromes eingreifende Umlenkungs-, Verwirbelungs-, Schaufel- und/oder Speicherzonen gebildet.

Insbesondere an den stromab- und zugewandten Seiten (Lee/Luv-Seiten) der Strukturen kommt es zu Verwirbelungen des Abgasstromes, so dass die im Abgasstrom befindlichen Rußpartikel zu häufigem Kontakt mit der Oberfläche bzw. Speicherzonen des Auffangelementes 1 gezwungen werden. Dadurch erhöht sich die Wahrscheinlichkeit, dass die Rußpartikel an der Oberfläche anhaften.

Das Auffangelement 1 ist im wesentlichen mit der strukturierten Oberfläche so in dem Abgasstrom angeordnet, dass die Abgasströmung parallel zu der Oberfläche des Auffangelementes verlaufen kann.

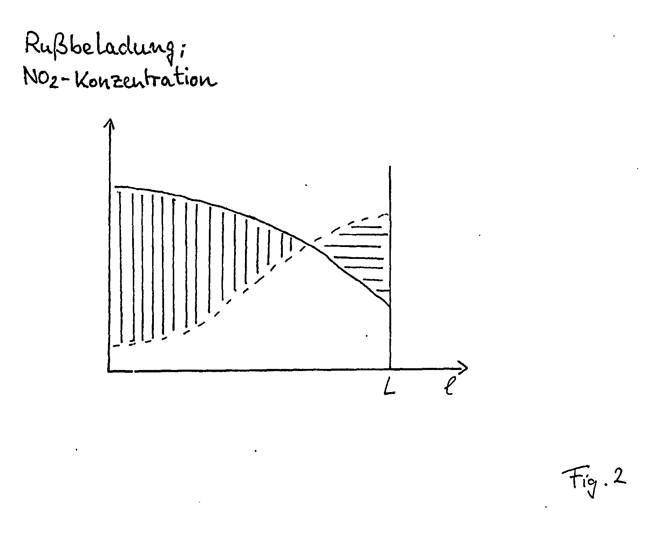

Da die Rußpartikelkonzentration im Abgasstrom an einem stromzugewandten Abschnitt des Auffangelementes 1 größer ist als an einem stromabgewandten Abschnitt des Auffangelementes 1 kommt es zu einem Gefälle der Menge der abgeschiedenen Rußpartikel über die gesamte Länge des Auffangelementes 1, d.h. die Rußbeladung nimmt ab. In Figur 2 erkennt man den Verlauf der Rußbeladung von Rußpartikeln über die Länge des Auffangelementes. Die Rußbeladung ist über die Länge des Auffangelementes 1 durch die durchgezogenen Linie dargestellt.

Um die abgeschiedenen Rußpartikel auf dem Auffangelement 1 zu regenerieren, ist das Auffangelement mit einer Beschichtung aus einem katalytischem Material, z.B. Platin, versehen. Das katalytischen Material bewirkt bei Kontakt eine Oxidation des in dem Abgas befindlichen Stickoxid NO zu Stickstoffdioxid NO₂, wenn die Temperatur des Auffangelementes genügend hoch ist (>250°C) und wenn ausreichend NO vorhanden ist. Die Rußpartikel werden bei Vorhandensein von NO₂ durch dieses gemäß der folgenden Reaktionsgleichung zu Kohlendioxid CO₂ umgewandelt:

C + 2 NO₂ -> CO₂ + 2 NO

Es ist notwendig, das Auffangelement 1 von den abgeschiedenen Rußpartikeln zu befreien, da ansonsten die Strukturen von dem abgeschiedenen Ruß abgedeckt werden würden, so dass im wesentlichen keine weiteren Rußpartikel aus dem Abgasstrom gefiltert werden. Zudem führt eine zunehmende Ablagerung von Ruß auf dem Auffangelement 1 dazu, das der Strömungswiderstand ansteigt und der Druck des Abgases auf dem stromzugewandten Abschnitt des Auffangelementes 1 ansteigt. Dies erhöht den Kraftstoffverbrauch der Brennkraftmaschine.

Um nun die abgeschiedenen Rußpartikel von dem Auffangelement 1 kontinuierlich während des Reinigen des Abgases durch ein Bereitstellen von NO₂ zu oxidieren und somit von dem Auffangelement wieder zu entfernen, wäre es aufgrund des Verlaufes der Rußbeladung notwendig an dem stromzugewandten Abschnitt des Auffangelementes 1 mehr NO₂ zur Verfügung zu stellen als am stromabgewandten Abschnitt des Auffangelementes.

Bei einer gleichmäßigen Beschichtung des Auffangelementes 1 mit katalytischem Material liegt die NO₂ -Konzentration an dem stromzugewandten Abschnitt auf niedrigem Niveau und nimmt über die Länge des Auffangelementes stetig zu, d.h. die Steigungen der Verläufe der Rußkonzentration und des Katalysationsgrad, d.h. die Menge des gebildeten NO₂ aus verfügbarem NO, sind zueinander entgegengesetzt.

Man erkennt in Figur 2, dass an dem stromzugewandten Abschnitt des Auffangelementes 1 die Konzentration von aus dem Abgas abgeschiedenen Rußpartikel erheblich die NO₂-Bildung übersteigt während am stromabgewandten Abschnitt des Auffangelementes 1 ein NO₂-Überschuss bezüglich vorhandener Rußpartikel besteht. Somit werden an dem stromzugewandten Abschnitt des Auffangelementes 1 mehr Rußpartikel abgeschieden als aufgrund des Mangels an NO₂ in CO₂ umgesetzt werden können, so dass sich Rußpartikel dauerhaft ablagern. An dem stromabgewandten Abschnitt wird mehr NO₂ durch die Katalyse gewonnen als für die Oxidation der dort vorhandenen Rußpartikel benötigt wird.

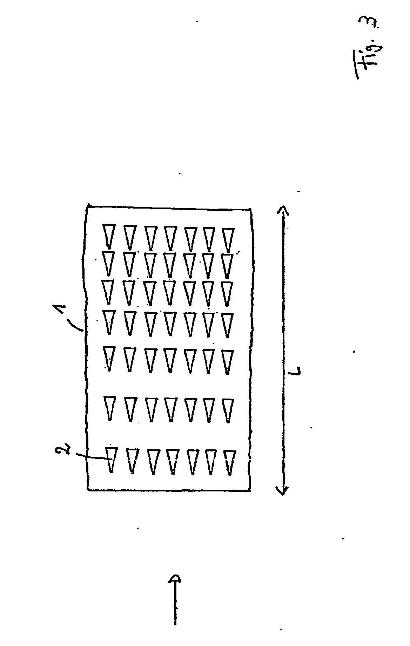

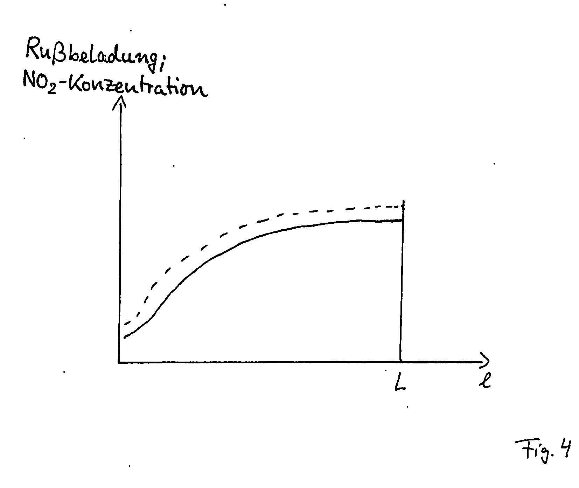

In Figur 3 ist ein Auffangelement gemäß einer ersten bevorzugten Ausführungsform der Erfindung dargestellt. Man erkennt, dass die Strukturen 2 sich über die Länge des Auffangelementes 1 so verändern, dass die Dichte der Strukturen zum stromabgewandten Abschnitt des Auffangelementes 1 hin zunimmt. Auf diese Weise wird die Effizienz des Abscheidens von Rußpartikeln aus dem Abgasstrom zum stromabgewandten Abschnitt des Auffangelementes 1 hin erhöht. Somit kann die Abscheiderate der Rußpartikel dem Verlauf des Katalysationsgrades angepasst werden. Dies ist in dem Diagramm der Figur 4 dargestellt. Man erkennt, dass die Abscheiderate der Rußpartikel beginnend mit dem stromzugewandten Ende des Auffangelementes 1 langsam ansteigt und sich in Richtung des stromabgewandten Endes des Auffangelementes 1 einem maximalen Wert nähert. Dadurch wird die Abscheiderate über die Länge des Auffangelementes 1 jeweils dem Katalysationsgrad einer gleichmäßigen Beschichtung des Auffangelementes angepasst. Der Katalysationsgrad, d.h. der Grad der NO₂-Bildung, ist durch die gestrichelte Linie dargestellt.

Vorzugsweise wird die Strukturierung des Auffangelementes 1 so gewählt, dass aufgrund der Rußbeladung an jeder Stelle des Auffangelementes immer etwas weniger Rußpartikel abgeschieden werden als durch die verfügbare Menge von NO₂ oxidiert werden können. Dies hat den Vorteil, dass keine Rußpartikel auf der Oberfläche des Auffangelementes dauerhaft abgeschieden werden und dadurch den Strömungswiderstand durch das Auffangelement erhöht. Eine ausreichende Rußspeicherkapazität muss dennoch für diejenigen Betriebspunkte vorgesehen werden, in denen keine oder keine vollständige Regeneration erfolgt, z.B. bei zu geringen Temperaturen oder bei NO-Mangel. Gleichzeitig wird die Menge an überschüssig erzeugtem NO₂ gering gehalten, um Geruchsbelästigungen in der Umwelt aufgrund des NO₂ zu vermeiden.

Alternativ kann auch die katalytische Wirkung des katalytischen Materials am stromzugewandten Ende des Auffangelementes 1 höher gewählt werden als am stromabgewandten Ende. Dies kann beispielsweise durch eine sich über die Länge des Auffangelementes 1 ändernde Beschichtung erreicht werden.

Das Auffangelement 1 kann in Zonen aufgeteilt sein, wobei die Beschichtungen jeder der Zonen unterschiedlich sind und eine bestimmte Dichte von katalytischem Material aufweisen. So kann beispielsweise vorgesehen sein, dass eine erste Zone an dem stromzugewandten Ende des Auffangelementes angeordnet ist, deren Beschichtung eine erste Konzentration von katalytischem Material, z.B. eine Konzentration von Platin im Bereich von 1,4 bis 2,4 g/dm³ (40 bis 70 g/ft³) aufweist. Eine zweite Zone schließt sich unmittelbar an die erste Zone an und reicht bis zu dem stromabgewandten Ende des Auffangelementes. Die Beschichtung der zweiten Zone kann beispielsweise eine zweite Konzentration von katalytischem Material aufweisen, die geringer ist als die erste Materialdichte, z.B. eine Platinkonzentration von 0,17 bis 0,71 g/dm³ (5 bis 20 g/ft³), aufweisen. Zwischen den beiden Zonen kann auch ein Abstand vorgesehen sein, in dem keine Strukturierung und/oder keine Beschichtung mit katalytischem Material vorgesehen ist.

Die Beschichtung kann auch als sogenannter Washcoat mit einem veränderlichen mineralischen Feststoffanteil (Aluminiumoxid o.ä.) ausgeführt sein. Der mineralische Feststoffanteil beeinflusst die Rauhigkeit der Oberfläche des Auffangelementes 1 und somit die Abscheiderate, da sich die Rußpartikel an einer rauheren Oberfläche bevorzugt absetzen können. Damit lässt sich neben der Veränderung der Strukturierung zum Beeinflussen der Abscheiderate auch über die Beschaffenheit der Beschichtung die Abscheiderate anpassen.

In dem Diagramm der Figur 4 ist die Bildung von NO₂ durch die gestrichelte Linie dargestellt. Die auf der Abscheidestruktur abgeschiedene Menge an Rußpartikeln und die Bildung von NO₂ sind in dem dargestellten Diagramm so aufgetragen, dass die Abscheiderate und der Katalysationsgrad, d.h. die Menge an gebildetem NO₂, bei gleichem X-Wert nahezu in einem stöchiometrischen Ausgleich zueinander stehen. Stöchiometrischer Ausgleich bedeutet, dass das durch den Katalysationsgrad gebildete NO₂ ausreicht, die abgeschiedenen Rußpartikel im wesentlichen vollständig in CO₂ umzusetzen, ohne dass ein NO₂-Überschuß entsteht.

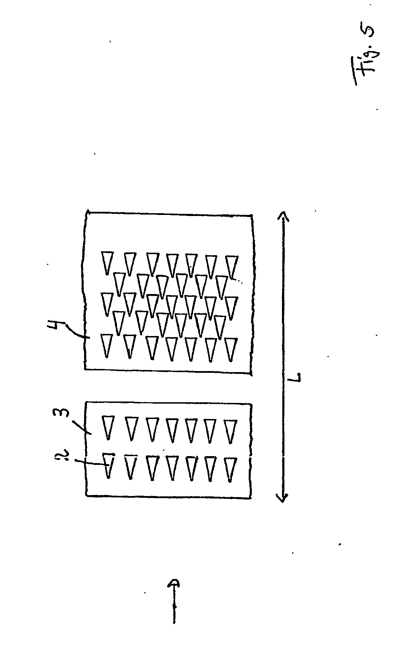

In Figur 5 ist eine weitere Ausführungsform der Erfindung dargestellt. Es ist eine Auffangeinheit mit einem ersten Auffangelement 3 und einem zweiten Auffangelement 4 dargestellt. Anstatt auf einem einzigen Auffangelement mehrere Zonen unterschiedlicher Strukturierung und/oder Beschichtung vorzusehen, werden zwei oder mehr Auffangelemente mit jeweils im wesentlichen gleichmäßiger Beschichtung jedoch mit variierter Strukturierung vorgesehen. Die aus dem ersten und dem zweiten Auffangelement 3,4 aufgebaute Auffangeinheit hat den Vorteil, dass die einzelnen Auffangelemente 3,4 auf einfache Weise hergestellt werden können, da keine Verläufe von Beschichtungen realisiert werden müssen.

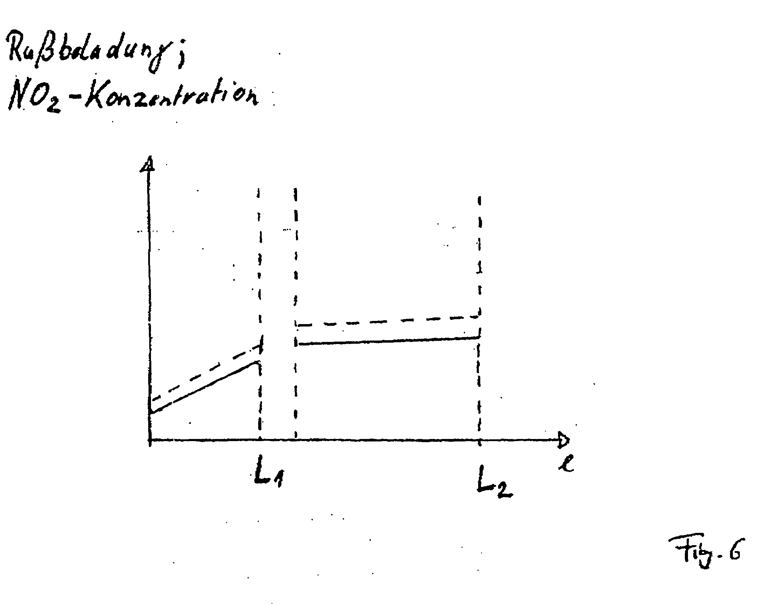

In dem Diagramm von Fig. 6 sind die Verläufe der Abscheideraten und der Katalysationsgrade für die beiden Auffangelemente 3,4 der in Fig. 6 dargestellten Auffangeinheit abgebildet. Das erste Auffangelement 3, das an der stromzugewandten Seite angeordnet ist, enthält eine größere Menge an katalytischem Material, z.B.: 2,1 g/dm³ (60 g/ft³) Platin. Dadurch wird schon an dem stromzugewandten Ende eine ausreichende Menge von NO₂ gebildet, um die dort abgeschiedenen Rußpartikel zu oxidieren. Die Strukturierung ist entsprechend angepasst, um in diesem Bereich nur so viele Rußpartikel abzuscheiden, so dass diese durch die gebildete NO₂-Menge oxidiert werden können.

Am stromabgewandten Ende des ersten Auffangelementes 3 erkennt man, dass die Katalysationsrate stark angestiegen ist. Die Abscheiderate von Rußpartikeln an dem stromabgewandten Ende hat ebenfalls gegenüber dem stromzugewandten Ende des ersten Auffangelementes 3 stark zugenommen. Das zweite Auffangelement 4 weist nun eine geringere Menge von katalytischem Material in der Beschichtung auf, z.B. 0,17 g/dm³ (5 g/ft³) Platin. Dadurch wird eine geringere Menge NO₂ gebildet. Gleichzeitig ist die Strukturierung dichter, so dass die Effizienz des Abscheidens von Rußpartikeln gegenüber des ersten Auffangelementes 3 bereits am stromzugewandten Ende des zweiten Auffangelementes 4 erhöht ist.

Die Abscheiderate von Rußpartikeln lässt sich im wesentlichen durch mehrere Faktoren beeinflussen. Es kommt im wesentlichen auf die Art der Strukturierung sowie die Beschaffenheit der Oberfläche an. Dabei haben vorzugsweise die Dichte, die Form, die Größe, die Beschichtung der Oberfläche, insbesondere deren Rauhigkeit, und die Anordnung der einzelnen Strukturen wesentlichen Einfluss auf die Abscheiderate von Rußpartikeln.

Mit Hilfe einer Lochung und/oder einer Perforation des Auffangelementes lässt sich auf einfache Weise sowohl die Abscheiderate als auch der Katalysationsgrad des Auffangelementes beeinflussen. Ein solches Auffangelement ist besonders einfach herzustellen, wenn das Auffangelement mit einer geeigneten Trägerfolie gefertigt ist, wobei die Lochung bzw. Perforation mit Hilfe eines herkömmlichen Stanzverfahrens in die Trägerfolie eingebracht wird.

## Patentansprüche

1. Auffangeinheit für eine Abgasreinigungsvorrichtung zum Beseitigen von Rußpartikeln aus dem Abgasstrom einer Brennkraftmaschine
mit einem Auffangelement, das eine Oberfläche aufweist, an der der Abgasstrom vorbeiströmt, wobei das Auffangelement eine Strukturierung, beispielsweise mit bezüglich der Oberfläche und der Strömungsrichtung des Abgases vertikalen Strukturen, aufweist, um Abscheidezonen und/oder Verweilzonen für das Abgas zu schaffen, wobei sich Rußpartikel auf der stromzu - und abgewandten Seite der Strukturen absetzen,
wobei die Strukturierung des Auffangelementes den Verlauf einer Abscheiderate für Rußpartikel über die Länge des Auffangelementes in Strömungsrichtung bestimmt,
wobei das Auffangelement mit einer Beschichtung mit einem katalytischem Material versehen ist, um einen NO-Anteil des Abgasstromes so zu oxidieren, dass ein von einem Katalysationsgrad abhängiger Anteil NO₂ gebildet wird,
**dadurch gekennzeichnet, dass**
die Auffangeinheit so gestaltet ist, dass die Strukturierungen und/oder die Beschichtungen des Auffangelementes an einem stromzugewandten Abschnitt der Auffangeinheit zu einem stromabgewandten Abschnitt des Auffangeinheit verschieden sind.

2. Auffangeinheit nach Anspruch 1, **dadurch gekennzeichnet, dass** die Strukturierung und der Katalysationsgrad an dem stromzugewandten Abschnitt der Auffangeinheit und die Strukturierung und der Katalysationsgrad an dem stromabgewandten Abschnitt der Auffangeinheit jeweils so aufeinander abgestimmt sind, dass die Abscheiderate von Rußpartikeln nicht größer ist als eine Oxidationsrate der Rußpartikel durch den Anteil von katalysiertem NO₂ im Abgas.

3. Auffangeinheit nach einem der Ansprüche 1 bis 2, **dadurch gekennzeichnet, dass** der Verlauf der Strukturierungen des Auffangelementes und/oder der Verlauf der Katalysationsgrade der Beschichtungen des Auffangelementes so aufeinander abgestimmt sind, dass entlang einer Länge der Auffangeinheit in Strömungsrichtung die Abscheiderate im wesentlichen der Oxidationsrate der Rußpartikel entspricht, so dass während des Betriebs der Brennkraftmaschine kein dauerhaftes Absetzen von Rußpartikeln erfolgt.

4. Auffangeinheit nach einem der Ansprüche 1 bis 3, **dadurch gekennzeichnet, dass** das Auffangelement entlang der Strömungsrichtung verschiedene Zonen mit jeweils einer verschiedenen Strukturierung und/oder mit Beschichtungen mit jeweils verschiedenen Katalysationsgraden aufweist.

5. Auffangeinheit nach einem der Ansprüche 1 bis 4, **dadurch gekennzeichnet, dass** die Abscheiderate von Rußpartikeln auf der Oberfläche durch Strukturierung des Auffangelementes, insbesondere durch die Größe, die Form, die Anordnung und/oder die Dichte der Strukturen auf dem Auffangelement, sowie durch die Beschaffenheit der Oberfläche des Auffangelementes, insbesondere deren Rauhigkeit, bestimmt wird.

6. Auffangeinheit nach einem der Ansprüche 1 bis 5, **dadurch gekennzeichnet, dass** die Auffangeinheit so gestaltet ist, dass die Dichte der Strukturen pro Längeneinheit variiert.

7. Auffangeinheit nach einem der Ansprüche 1 bis 6, **dadurch gekennzeichnet, dass** die Beschichtung das Material Platin und/oder Paladium aufweist.

8. Auffangeinheit nach Anspruch 1 bis 7, **dadurch gekennzeichnet, dass** die Beschichtungen mit einer Rauhigkeit vorgesehen sind, um die Abscheiderate zu beeinflussen, wobei die Rauhigkeit so gewählt ist, um die gewünschte Abscheiderate an dem stromzugewandten Abschnitt der Auffangeinheit und an dem stromabgewandten Abschnitt der Auffangeinheit einzustellen.

9. Auffangeinheit nach einem der Ansprüche 1 bis 8, **dadurch gekennzeichnet, dass** das Auffangelement eine Lochung und/oder eine Perforation aufweist, um die Abscheiderate und den Katalysationsgrad einzustellen.

10. Auffangeinheit nach einem der Ansprüche 1 bis 9 **gekennzeichnet durch** mehrere Auffangelemente, die hintereinander im Abgasstrom angeordnet sind, wobei die Auffangelemente jeweils Beschichtungen mit unterschiedlichen Katalysationsgraden und/oder unterschiedliche Strukturierungen aufweisen.

11. Auffangeinheit nach einem der Ansprüche 1 bis 9, **gekennzeichnet durch** mehrere Auffangelemente, die hintereinander im Abgasstrom angeordnet sind, wobei die Auffangelemente jeweils Beschichtungen mit gleichen Katalysationsgraden und variierenden Strukturierungen aufweisen.

12. Auffangeinheit nach einem der Ansprüche 1 bis 11, **dadurch gekennzeichnet, dass** die Strukturierung des Auffangelementes freie Kanäle sowie in die Strömungsrichtung des Abgasstromes eingreifende Umlenkungs-, Verwirbelungs-, Schaufel- und/oder Speicherzonen aufweist.

13. Auffangeinheit nach einem der Ansprüche 1 bis 12, **dadurch gekennzeichnet, dass** die Strukturierung des Auffangelementes freie Kanäle sowie in die Strömungsrichtung des Abgasstromes eingreifende Umlenkungs-, Verwirbelungs-, Schaufel- und/oder Speicherzonen aufweist.

14. Auffangeinheit nach einem der Ansprüche 5 bis 12, **dadurch gekennzeichnet, dass** mittels der Rauhigkeit der Beschichtung ein zusätzlicher Rußspeicher erzugt wird.

## Claims

1. A capturing unit for an exhaust gas cleaning apparatus for eliminating exhaust particulates from the exhaust gas stream of an internal combustion engine, comprising a capturing element having a surface on which the exhaust gas stream flows past, with the capturing element having a structuring, e.g. with structures which are vertical with respect to the surface and the direction of flow of the exhaust gas, in order to create separation zones and/or dwell zones for the exhaust gas, with the exhaust particulates accumulating on the side of the structures facing and averted from the flow, with the structuring of the capturing element determining the course of a separation rate for exhaust particulates over the length of the capturing element in the direction of flow, with the capturing element being provided with a coating with a catalytic material in order to oxidize an NO portion of the exhaust gas stream in such a way that a portion of NO₂ is formed which is dependent upon the degree of catalysis, **characterized in that** the capturing unit is configured in such a way that the structured elements and/or the coatings of the capturing element are different from a section of the capturing unit facing the flow to a section of the capturing unit averted from the flow.

2. A capturing unit according to claim 1, **characterized in that** the structuring and the degree of catalysis on the section of the capturing unit facing the flow and the structuring and degree of catalysis on the section of the capturing unit averted from the flow are adjusted to each other in such a way that the separation rate of exhaust particulates is not larger than an oxidation rate of the exhaust particulates by the portion of catalyzed NO₂ in the exhaust gas.

3. A capturing unit according to one of the claims 1 to 2, **characterized in that** the progress of the structured elements of the capturing element and/or the progress of the degree of catalysis of the coatings of the capturing element are adjusted to each other in such a way that the separation rate substantially corresponds to the oxidation rate of the exhaust particulates along a length of the capturing unit in the direction of flow, so that there is no permanent depositing of exhaust particulates during the operation of the internal combustion engine.

4. A capturing unit according to one of the claims 1 to 3, **characterized in that** the capturing element comprises along the direction of flow different zones each with a different structuring and/or with coatings with different degrees of catalysis each.

5. A capturing unit according to one of the claims 1 to 4, **characterized in that** the separation rate of exhaust particulates on the surface is determined by structuring of the capturing element, especially by size, shape, arrangement and/or density of the structures on the capturing element, as well as by the configuration of the surface of the capturing element, especially its roughness.

6. A capturing unit according to one of the claims 1 to 5, **characterized in that** the capturing unit is configured in such a way that the density of the structures varies per unit of length.

7. A capturing unit according to one of the claims 1 to 6, **characterized in that** the coating comprises the material of platinum and/or palladium.

8. A capturing unit according to claim 1 to 7, **characterized in that** the coatings are provided with a roughness in order to influence the separation rate, with the roughness being chosen in such a way in order to set the desired separation rate on the section of the capturing unit facing the flow and the section of the capturing unit averted from the flow.

9. A capturing unit according to one of the claims 1 to 8, **characterized in that** the capturing unit comprises a punching and/or perforation in order to set the separation rate and the degree of catalysis.

10. A capturing unit according to one of the claims 1 to 2, **characterized by** several capturing elements which are arranged successively in the exhaust gas stream, with the capturing elements each comprising coatings with different degrees of catalysis and/or different structuring elements.

11. A capturing unit according to one of the claims 1 to 9, **characterized by** several capturing elements which are arranged successively in the exhaust gas stream, with the capturing elements each comprising coatings with the same degree of catalysis and/or varying structuring elements.

12. A capturing unit according to one of the claims 1 to 11, **characterized in that** the structuring of the capturing element comprises free channels as well as deflection, swirling, blade and/or storage zones engaging in the direction of the exhaust gas stream.

13. A capturing unit according to one of the claims 1 to 12, **characterized in that** the structuring of the capturing element comprises free channels as well as deflection, swirling, blade and/or storage zones engaging in the direction of the exhaust gas stream.

14. A capturing unit according to one of the claims 5 to 12, **characterized in that** an additional exhaust particulate storage is produced by means of the roughness of the coating.

## Revendications

1. Unité de collecteur pour un dispositif de purification de gaz de combustion, destinée à éliminer des particules de suie dans le flux de gaz de combustion d'un moteur à combustion interne, avec un élément collecteur possédant une surface devant laquelle circule le flux de gaz de combustion, lequel élément collecteur possède une surface structurée, par exemple avec des structures verticales par rapport à la surface et au sens de circulation des gaz de combustion, pour créer des zones de précipitation et/ou des zones de stase pour le gaz de combustion, des particules de suie se déposant sur le côté des structures dirigées vers l'amont et l'aval du flux, dans laquelle la surface structurée de l'élément collecteur détermine l'évolution d'un taux de précipitation des particules de suie sur la longueur de l'élément collecteur dans le sens du flux, dans laquelle l'élément collecteur est doté d'un revêtement en matériau catalytique afin d'oxyder une fraction de NO dans le flux de gaz de combustion de façon à former une fraction de NO₂ dépendante du degré de catalyse,
**caractérisée en ce que**
l'unité de collecteur est conformée de telle manière que les surfaces structurées et/ou les revêtements de l'élément collecteur soient différents sur une partie de l'unité de collecteur orientée vers l'amont du flux et sur une partie de l'unité de collecteur orientée vers l'aval du flux.

2. Unité de collecteur selon la revendication 1, **caractérisée en ce que** la surface structurée et le degré de catalyse dans la partie de l'unité de collecteur orientée vers l'amont du flux et la surface structurée et le degré de catalyse dans la partie de l'unité de collecteur orientée vers l'aval du flux sont adaptés l'un à l'autre de telle manière que le taux de précipitation de particules de suie ne soit pas supérieur à un taux d'oxydation des particules de suie par la fraction de NO₂ catalysé dans le gaz de combustion.

3. Unité de collecteur selon l'une quelconque des revendications 1 à 2, **caractérisée en ce que** l'évolution de la surface structurée de l'élément collecteur et/ou l'évolution du degré de catalyse des revêtements de l'élément collecteur sont ajustées l'une à l'autre de telle manière que le long d'une longueur de l'unité de collecteur dans le sens du flux, le taux de précipitation corresponde sensiblement au taux d'oxydation des particules de suie, de sorte qu'il ne se produit pas de dépôt durable de particules de suie pendant le fonctionnement du moteur à combustion interne.

4. Unité de collecteur selon l'une quelconque des revendications 1 à 3, **caractérisée en ce que** l'élément collecteur présente dans le sens du flux différentes zones ayant chacune une surface structurée différente et/ou un revêtement ayant un degré de catalyse différent.

5. Unité de collecteur selon l'une quelconque des revendications 1 à 4, **caractérisée en ce que** le taux de précipitation de particules de suie sur la surface est déterminé par la surface structurée des l'élément collecteur, en particulier par la taille, la forme, la disposition et/ou la densité des structures sur l'élément collecteur, ainsi que par la structure de la surface de l'élément collecteur, et en particulier par sa rugosité.

6. Unité de collecteur selon l'une quelconque des revendications 1 à 5, **caractérisée en ce que** l'unité de collecteur est conformée de telle sorte que la densité des structures par unité de longueur varie.

7. Unité de collecteur selon l'une quelconque des revendications 1 à 6, **caractérisée en ce que** le revêtement contient du platine et/ou du palladium.

8. Unité de collecteur selon la revendication 1 à 7, **caractérisée en ce que** les revêtements ont une rugosité destinée à influer sur le taux de précipitation, la rugosité étant choisie de manière à ajuster le taux de précipitation souhaité dans la partie de l'unité de collecteur orientée vers l'amont du flux et dans la partie de l'unité de collecteur orientée vers l'aval du flux.

9. Unité de collecteur selon l'une quelconque des revendications 1 à 8, **caractérisée en ce que** l'élément collecteur possède un criblage et/ou une perforation pour ajuster le taux de précipitation et le degré de catalyse.

10. Unité de collecteur selon l'une quelconque des revendications 1 à 9, **caractérisée en ce qu'**elle comporte plusieurs éléments collecteurs, disposés les uns derrière les autres dans le flux de gaz de combustion, lesquels éléments collecteurs présentent chacun un revêtement ayant un degré de catalyse différent et/ou une surface structurée différente.

11. Unité de collecteur selon l'une quelconque des revendications 1 à 9, **caractérisée en ce qu'**elle comporte plusieurs éléments collecteurs, disposés les uns derrière les autres dans le flux de gaz de combustion, les éléments collecteurs présentant des revêtements ayant les mêmes degrés de catalyse et des surfaces structurées variables.

12. Unité de collecteur selon l'une quelconque des revendications 1 à 11, **caractérisée en ce que** la surface structurée de l'élément collecteur présente des canaux libres et des zones de déviation, de turbulence, d'ailettes et/ou d'accumulation qui empiètent dans le sens de circulation du flux de gaz de combustion.

13. Unité de collecteur selon l'une quelconque des revendications 1 à 12, **caractérisée en ce que** la surface structurée de l'élément collecteur présente des canaux libres et des zones de déviation, de turbulence, d'ailettes et/ou d'accumulation qui empiètent dans le sens de circulation du flux de gaz de combustion.

14. Unité de collecteur selon l'une quelconque des revendications 5 à 12, **caractérisée en ce que** la rugosité du revêtement crée une accumulation supplémentaire de suie.
